# EUROPÄISCHE PATENTANMELDUNG

(11) **EP 1 281 579 A1**
(43) Veröffentlichungstag der Anmeldung: **05.02.2003**
(21) Anmeldenummer: 02015486.0
(22) Anmeldetag: 12.07.2002
(51) Int. Cl.: B60R 13/07, F16L 11/11, B60J 7/02

(54) **Schlauchanordnung für Fahrzeuge**

(30) Priorität: 30.07.2001 DE 10137033
(71) Anmelder: DaimlerChrysler AG, 70567 Stuttgart (DE)
(72) Erfinder: Kober, Peer-Olaf, 71067 Sindelfingen (DE)

(57) **Zusammenfassung**

Die Erfindung bezieht sich auf eine Schlauchanordnung für Fahrzeuge mit einer Schlauchleitung (2), die mit einem Ende an einem beweglichen Fahrzeugteil (3) und mit ihrem anderen Ende an einem unbeweglichen Fahrzeugteil (5) gehalten ist, wobei der Abstand zwischen den Enden der Schlauchleitung (2) in einer dem unbeweglichen Fahrzeugteil nahen Endlage des beweglichen Fahrzeugteils auf ein zu einer Knickbelastung der Schlauchleitung führendes Maß verkürzt ist.

Um im Zuge von Relativbewegungen des beweglichen Fahrzeugteils gegenüber dem unbeweglichen Fahrzeugteil selbsttätig eine Sollverlagerung der Schlauchleitung zwischen ihren Endlagen sicherzustellen, weist diese einen flexiblen Längenbereich (2d,2c) auf, an dessen beiden Enden sich zur Steuerung einer vorgesehenen Ausweichfaltung jeweils ein steiferer Längenbereich der Schlauchleitung anschließt.

## Beschreibung

Die Erfindung betrifft eine Schlauchanordnung für Fahrzeuge der im Oberbegriff des Anspruchs 1 angegebenen Art.

Eine derartige Schlauchanordnung ist z. B. aus dem Serienfahrzeugbau bekannt, wobei z.B. Schutzschläuche mit darin verlaufenden elektrischen Leitungen entlang von Scharnierarmen von Heckdeckeln oder dgl. verlegt sind, um z. B. auf einfache Weise den Anschluss elektrischer Verbraucher im Heckdeckel an das Bordnetz zu ermöglichen. Die gezielte Verlagerung des die Kabel führenden Schlauches im Zuge der Relativbewegung des Heckdeckels gegenüber dem Rahmen der Karosserie kann dabei über die Verlagerung des Scharnierarmes gesteuert werden, zumal die im Schutzschlauch verlegten Kabel einen gewissen Schutz vor einem scharfen Ausknicken des Schutzschlauches bieten. Die zuverlässige Einnahme der Sollposition solcher Schlauchanordnungen kann jedoch nur sichergestellt werden, wenn der freie Abstand zwischen den Enden der Schlauchleitung nicht zu groß wird oder die Schlauchleitung einen relativ großen Biegewiderstand sowie eine drehfeste Anbindung der Schlauchenden aufweist.

Der Erfindung liegt die Aufgabe zugrunde, eine Schlauchanordnung der gattungsgemäßen Art dahingehend weiterzuentwickeln, dass das Ausweichverhalten der Schlauchleitung unter Knickbelastung beim Aufeinanderzubewegen der die Schlauchenden haltenden Fahrzeugteile deutlich besser gesteuert werden kann.

Die Lösung dieser Aufgabe ist Gegenstand der Merkmale des Anspruchs 1.

Vorteilhafte Ausgestaltungen der Erfindung sind den Unteransprüchen zu entnehmen.

Nachfolgend ist ein Ausführungsbeispiel der Erfindung anhand einer zeichnerischen Darstellung näher erläutert.

In der Darstellung zeigen:
- Fig. 1: eine schematische Darstellung einer Schlauchleitung in ihrer gestreckten Nutzstellung und
- Fig. 2: die Schlauchleitung gemäß Fig. 1 in ihrer vorgesehenen Ausweichstellung.

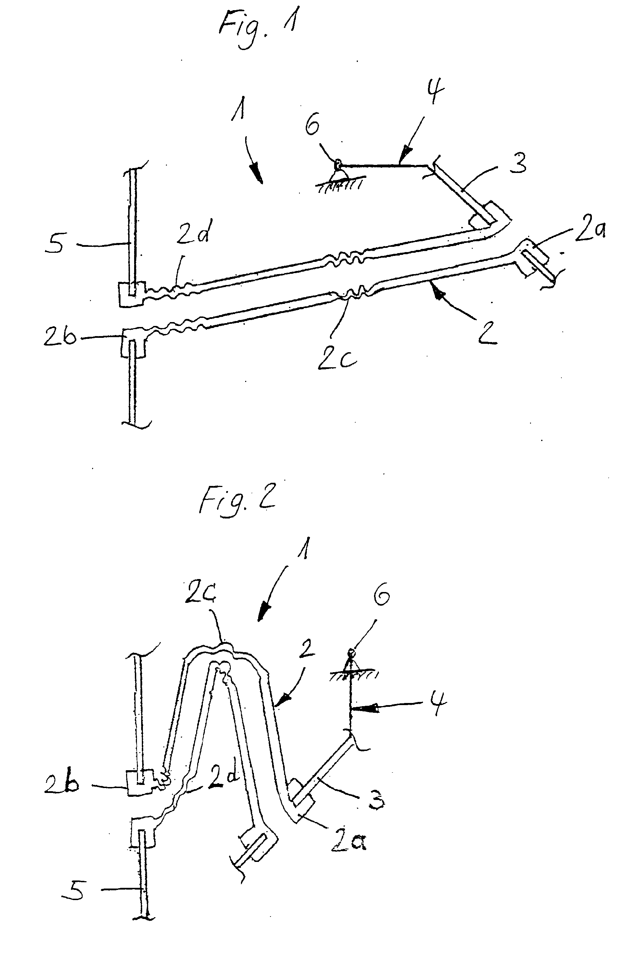

Die in Fig. 1 und Fig. 2 im Schnitt sichtbare Leitungsanordnung 1 dient dem Zweck, Regenwasser mittels einer Schlauchleitung 2 aus einem hinter einer festen Heckscheibe liegenden Abschlussbereich eines versenkbaren Klappdaches bekannter Art ins Freie abzuführen, wenn das Dach geschlossen ist.

Hierzu ist die Schlauchleitung 2 mit einem Ende 2a an eine Bohrung in einer seitlichen Begrenzungswand 3 einer Regenwasser aufnehmenden Rinne eines hinteren Dachteils 4 und mit ihren entgegengesetzten Ende 2b an eine Bohrung im benachbarten Radhaus 5 der Karosserie angeschlossen, wobei die Enden 2a und 2b als Dichtring mit U-förmigem Querschnitt ausgebildet sind, welcher die zugeordnete Bohrung durchdringt und den an die Bohrung angrenzenden Rand der Begrenzungswand 3 bzw. des Radhauses 5 formschlüssig umgreift

Bei geschlossenem Dach erstreckt sich die Schlauchleitung gemäß Fig. 1 schräg nach unten und hat somit in ihrer Nutzstellung das zur restlosen Wasserabfuhr notwendige Gefälle. Wird das nicht gezeigte Klappdach geöffnet, schwingt das hintere Dachteil 4 um eine horizontale Fahrzeugquerachse 6 nach hinten, wodurch das Ende 2a auf einer Kreisbahn um die Achse 6 nach unten vorn und damit auf das entgegengesetzte Ende 2b zu bewegt wird.

Infolge der dabei entstehenden Knickbeanspruchung der Schlauchleitung 2 wird durch zwei flexible Längenbereiche 2c und 2d eine gesteuerte Ausweichfaltung der Schlauchleitung 2 erreicht.

Dabei befindet sich der flexible Längenbereich 2c etwa mittig zwischen den Enden 2a und 2b während der zweite flexible Längenbereich 2d unmittelbar an das radhausseitige Ende 2b anschließt.

Da die flexiblen Längenbereiche 2c und 2d balgenartig gestaltet sind und eine geringere Wanddicke aufweisen als daran anschließende, gerade und demnach biegesteifere Längenbereiche der Schlauchleitung 2, knickt die Schlauchleitung 2 unter Knickbeanspruchung exakt in diesen flexiblen Bereichen aus. In der gefalteten Endlage weist die Schlauchleitung 2 zwischen ihren Enden 2a und 2b eine in Fig. 2 sichtbare V-Form auf, wobei Begrenzungswand 3 und Radhaus 5 einen spitzen Winkel von ca. 45 Grad einschließen.

Die gesamte Schlauchleitung lässt sich vorzugsweise als einteiliges Kunststoffteil ausbilden, z. B. aus EPDM spritzen, wodurch eine besonders wirtschaftliche Fertigung möglich ist. Zur Auslegung gilt hierbei, dass eine dicke Wandstärke im geraden Längenbereich zur nötigen Biege- bzw. Knicksteifigkeit führt, während die gewellten Längenbereiche mit geringerer Wandstärke entsprechend flexibel sind.

Es versteht sich, dass beim vorliegenden Anwendungsfall auf beiden Seiten des Klappdaches unter spiegelsymmetrischer Anordnung zwei Schlauchleitungen angeordnet sein können.

Durch die geschickte Kombination der flexiblen und der biegesteifen Bereiche der Schlauchleitung lässt sich das Faltverhalten der Leitung so steuern, dass der Schlauch ohne zusätzliche Hilfsmittel in dem Bereich positioniert wird, der für das Gesamtsystem vorteilhaft ist.

Somit kann ein knapper Bauraum besser genutzt werden oder auch ein Einklemmen der Schlauchleitung zwischen Bauteilen auf kostengünstige Weise zuverlässig verhindert werden. Die Schlauchanordnung eignet sich nicht nur zur Ablagesteuerung eines Wasserablaufschlauchs sondern kann alternativ auch zur Ablagesteuerung von Kabelschläuchen oder Luftführungsschläuchen genutzt werden.

Die beschrieben Ausführungsform samt der Anordnung der flexiblen Sollbiegestellen im Schlauch ist hier für den besonderen Anwendungsfall der Wasserabfuhr aus einem hinteren Dachbereich in Verbindung mit den Bauraumverhältnissen im Umgebungsbereich ausgelegt worden. Bei anderen Anwendungsfällen kann die Festlegung der Sollbiegestellen nach den geänderten Randbedingungen konstruktiv angepasst werden. Auch kann es geboten sein, mehr als zwei Sollbiegestellen vorzusehen.

## Patentansprüche

1. Schlauchanordnung für Fahrzeuge mit mindestens einer Schlauchleitung, die mit einem Ende an einem beweglichen Fahrzeugteil und mit ihrem anderen Ende an einem unbeweglichen Fahrzeugteil gehalten ist, wobei der Abstand zwischen den Enden der Schlauchleitung in einer dem unbeweglichen Fahrzeugteil nahen Endlage des beweglichen Fahrzeugteils auf ein zu einer Knickbelastung der Schlauchleitung führendes Maß verkürzt ist,
**dadurch gekennzeichnet,**
**dass** die Schlauchleitung ( 2 ) mindestens einen flexiblen Längenbereich ( 2c, 2d ) aufweist, an dessen beide Enden sich jeweils ein knicksteiferer Längenbereich der Schlauchleitung ( 2 ) zur Steuerung einer vorgesehenen Ausweichfaltung derselben anschließt.

2. Schlauchanordnung nach Anspruch 1,
**dadurch gekennzeichnet,**
**dass** jeder flexible Längenbereich ( 2c, 2d ) der Schlauchleitung
( 2 ) balgenartig gestaltet ist.

3. Schlauchanordnung nach Anspruch 1,
**dadurch gekennzeichnet,**
**dass** ein flexibler Längenbereich( 2c ) der Schlauchleitung ( 2 ) etwa mittig zwischen den Enden ( 2a und 2b ) angeordnet ist.

4. Schlauchanordnung nach Anspruch 3,
**dadurch gekennzeichnet,**
**dass** die jeweils ein Schlauchende ( 2a oder 2b ) haltenden Bereiche des unbeweglichen ( 5 ) und des beweglichen Fahrzeugteils ( 3 ) in der Endlage einen spitzen Winkel einschließen und dass in einem der Endbereiche der Schlauchleitung ( 2 ) ein zweiter flexibler Längenbereich ( 2d ) vorgesehen ist.

5. Schlauchanordnung nach Anspruch 4,
**dadurch gekennzeichnet,**
**dass** die Länge der Schlauchleitung ( 2 ) auf den maximalen Abstand zwischen den beiden ein Schlauchende ( 2a oder 2b ) haltenden Bereichen der Fahrzeugteile ( 3 und 5 ) abgestimmt ist.

6. Schlauchanordnung nach Anspruch 1,
**dadurch gekennzeichnet,**
**dass** die Schlauchenden ( 2a und 2b ) jeweils als Dichtring ausgebildet sind, der formschlüssig mit dem Umfangsrand einer zugehörigen Durchlassöffnung im zugeordneten Fahrzeugteil (3 oder 5) zusammenwirkt.

7. Schlauchanordnung nach Anspruch 1,
**dadurch gekennzeichnet,**
**dass** die Schlauchleitung ( 2 ) ein Wasserablaufschlauch zur Entwässerung eines wasserbeaufschlagten Fahrzeugbereiches ist.

8. Schlauchanordnung nach Anspruch 1,
**dadurch gekennzeichnet,**
**dass** die Schlauchleitung ( 2 ) im flexiblen Längenbereich ( 2c und 2d ) eine geringere Wanddicke aufweist als in ihren daran anschließenden, steiferen Längenbereichen.
